# EUROPÄISCHE PATENTSCHRIFT

(11) **EP 2 985 836 B1**
(45) Veröffentlichungstag und Bekanntmachung des Hinweises auf die Patenterteilung: **02.10.2019**
(21) Anmeldenummer: 15002375.2
(22) Anmeldetag: 10.08.2015
(51) Int. Cl.: H01Q 3/40, H04B 3/56, H01Q 1/02, H01P 1/18, H01Q 3/32, H01Q 21/06, H01P 5/18

(54) **SPEISENETZWERKANORDNUNG ZUM GENERIEREN EINES MEHRFACHANTENNENSIGNALS**
FEED NETWORK ASSEMBLY FOR GENERATING A MULTIPLE ANTENNA SIGNAL
SYSTÈME DE RÉSEAU D'ALIMENTATION DESTINÉ À GÉNÉRER UN SIGNAL D'ANTENNES MULTIPLES

(30) Priorität: 13.08.2014 DE 102014011883
(43) Veröffentlichungstag der Anmeldung: 17.02.2016
(73) Patentinhaber: Tesat-Spacecom GmbH & Co. KG, 71522 Backnang (DE)
(72) Erfinder: Hundsdorfer, Sigurd, 71576 Erbstetten (DE); Behr, Christian, 71404 Korb (DE); Scheffel, Andreas, 71549 Auenwald (DE); Zedler, Michael, 70180 Stuttgart (DE)
(74) Vertreter: LKGLOBAL Lorenz & Kopf PartG mbB Patentanwälte

(56) Entgegenhaltungen:
- US-A- 4 812 788
- US-A- 5 276 455
- US-A1- 2005 012 665
- US-A1- 2010 321 238
- US-A1- 2011 304 508
- YU JIAN CHENG ET AL: "MINIATURIZED MULTILAYER FOLDED SUBSTRATE INTEGRATED WAVEGUIDE BUTLER MATRIX", PROGRESS IN ELECTROMAGNETICS RESEARCH C, Bd. 21, 12. April 2011 (2011-04-12), Seiten 45-58, XP055238662, DOI: 10.2528/PIERC11020502

## Beschreibung

### Technisches Gebiet

Die vorliegende Erfindung betrifft die Signalerzeugung für Mehrfachantennen. Insbesondere betrifft die vorliegende Erfindung eine Speisenetzwerkanordnung zum Generieren eines Mehrfachantennensignals.

### Technischer Hintergrund

Die EP 1 530 816 B1 beschreibt eine Kalibriereinrichtung für ein umschaltbares Antennen-Array, bei welchem zumindest zwei Eingänge von mehreren vorhandenen Eingängen des Strahlformungsnetzwerkes gleichzeitig und/oder gemeinsam und/oder phasengleich angespeist werden. Das Antennen-Array umfasst dabei mehrere übereinander angeordnete Einzelstrahler.

Ein Antennen-Array oder eine Gruppen- oder Mehrfachantenne umfasst üblicherweise mehrere Primärstrahler, mindestens jedoch zwei neben- und übereinander angeordnete Strahler, so dass sich eine zweidimensionale Array-Anordnung ergibt.

Diese auch unter dem Begriff "Smart-Antennen" oder auch als adaptives Array-Antennen bekannten Antennen-Arrays werden im Bereich der Militärtechnik und im Bereich der mobilen Datenübertragung eingesetzt.

Dabei werden beispielsweise Strahlformungsnetzwerke, auf Englisch "beam-forming-network", eingesetzt, welche Signale mit festen Phasenbeziehungen für die einzelnen Einzelstrahler des Antennen-Arrays erzeugen.

US 2011/304508 A1 beschreibt ein Antennensystem zum Abschätzen einer Auftreffrichtung eines Signals, aufweisend eine erste Rundstrahlantenne und eine zweite Rundstrahlantenne, welche koaxial über der ersten Rundstrahlantenne angeordnet ist.

Yu Jian Cheng et al.: "Miniaturized Multilayer Folded Substrate Integrated Waveguide Butler Matrix", 12. April 2011, beschreibt eine auf einem Trägermaterial integrierte Butler-Matrix.

US 4,812,788 beschreibt eine Anordnung von Wellenleitern und Kopplungsausnehmungen, welche in Wänden so angeordnet sind, dass sie die Wellenleiter voneinander separieren.

US 2005/012665 A1 beschreibt eine drahtlose, doppelt polarisierte Antenne mit einer Strahlsteuerungsschaltung, welche einen variablen Leistungsteiler und ein Mehrstrahl-Strahlformungsnetzwerk aufweist.

US 5,276,455 beschreibt eine phasengesteuerte Gruppenantennenstruktur mit einem Verteilungsnetz und einem Verbund aus eines Einspeisung, Modulen und Antennenwabenstrukturen.

### Zusammenfassung der Erfindung

Es ist eine Aufgabe der vorliegenden Erfindung, eine verbesserte Speisenetzwerkanordnung zum Generieren von Mehrfachantennensignalen bereitzustellen.

Diese Aufgabe wird durch die Gegenstände der unabhängigen Ansprüche gelöst. Ausführungsformen und Weiterbildungen der vorliegenden Erfindung sind den abhängigen Ansprüchen, der Beschreibung und den Figuren zu entnehmen.

Ein erster Aspekt der vorliegenden Erfindung betrifft eine Speisenetzwerkanordnung laut Anspruch 1.

Die vorliegende Erfindung stellt ein Kopplernetzwerk zur flexiblen und phasengesteuerten Leistungskombination bereit und ermöglicht eine ausreichend gesicherte Phasenstabilität in allen Betriebsmodi.

Die vorliegende Erfindung ermöglicht eine kompakte und stabile Bauweise des Speisenetzwerks bzw. des Kopplernetzwerks in Hohlleitertechnik mit ausreichend hoher Wärmeleitfähigkeit zwischen den dissipativen Kopplern bzw. Kopplereinrichtungen.

Vorteilhaft ermöglicht die vorliegende Erfindung eine vertikale Integration durch hinreichend klein ausgebildete Adapterplatten bzw. Adapterplatteneinrichtungen, welche eine individuelle Anpassung an die thermische Struktur von Trägerplatten ermöglichen. Vorteilhaft ermöglicht die vorliegende Erfindung, dass Posaunen bzw. Posauneneinrichtungen dazu ausgelegt sind, eine elektrische Länge zwischen den Kopplern abzugleichen.

Die vorliegende Erfindung ermöglicht vorteilhaft ein Überschreiten von im Vorfeld bestimmten Grenzwerte für auftretende Temperaturgradienten zu vermeiden und dadurch bedingte Abweichungen der elektrischen Weglängen zu vermeiden und somit auftretende Phasendriften innerhalb des Speisenetzwerkes bzw. innerhalb der Speisenetzwerkanordnung zu vermeiden.

Vorteilhaft kann die vorliegende Erfindung eine Speisenetzwerkanordnung mittels der Mehrschalentechnik bereitstellen, wobei abgleichbare E- und H-Koppler alternierend mit 180° Hohlleitbögen verbunden werden können.

Vorteilhaft ermöglicht die vorliegende Erfindung eine räumliche Trennung von Ein- und Ausgängen. Die Kopplernetzanordnung ist derart ausgebildet, dass Eingänge auf der einen Seite und Ausgänge auf der anderen, gegenüberliegenden Seite angeordnet sind.

Ferner ermöglicht die vorliegende Erfindung eine Vermeidung von Verbindungen, welche sich über eine Flanschebene erstrecken.

Die vorliegende Erfindung stellt ein Kopplernetzwerk zur Versorgung eines Antennen-Arrays bereit, wobei als Strahlerelement des Antennen-Arrays beispielsweise Hornstrahler verwendet werden.

Vorteilhafte Ausgestaltungen der vorliegenden Erfindung sind in den Unteransprüchen gekennzeichnet.

In einer vorteilhaften Ausführungsform der vorliegenden Erfindung ist vorgesehen, dass die Kopplereinrichtungen derart angeordnet sind, dass die erste Seite gegenüber der zweiten Seite ist.

Dabei kann der Begriff "gegenüber", wie von der vorliegenden Erfindung verwendet, bedeuten oder festlegen, dass die erste Seite und die zweite Seite gegenüberliegende Seiten ausbilden und beispielsweise mit einer maximalen Winkelabweichung von weniger als 10° parallel ausgerichtet sind. Mit anderen Worten ausgedrückt, die erste Seite der Speisenetzwerkanordnung stellt eine Oberseite der Speisenetzwerkanordnung dar und die zweite Seite stellt eine Unterseite der Speisenetzwerkanordnung dar. Dies ermöglicht vorteilhaft, eine möglichst weite räumliche Trennung der Ein- und Ausgänge der Speisenetzwerkanordnung bereitzustellen und elektrische Störungen oder Koppelungen zwischen Ein- und Ausgängen zu vermeiden.

In einer weiteren, vorteilhaften Ausführungsform der vorliegenden Erfindung ist vorgesehen, dass die Mehrzahl der Kopplereinrichtungen auf bis zu sechs, besonders bevorzugt auf bis zu fünf unterschiedlichen Trägerplatten angeordnet sind. Dies ermöglicht vorteilhaft, dass eine begrenzte Zahl an Baugruppen für die Fertigung der Speisenetzwerkanordnung verwendet wird.

Beispielsweise kann als eine Adapterplatteneinrichtung eine sich in der Größe änderbare oder einstellbare thermische Kontaktfläche zwischen der Trägerplatte und der Kopplereinrichtung vorgesehen sein. Dies ermöglicht vorteilhaft trotz unterschiedlicher, vorherrschender thermischer Verhältnisse auf der Trägerplatte eine gleichmäßige Temperierung der Mehrzahl von auf der Trägerplatte angebrachten Kopplereinrichtungen zu gewährleisten.

Beispielsweise kann die Adapterplatteneinrichtung dazu ausbildet sein, die Größe der thermischen Kontaktfläche zwischen der Trägerplatte und der Kopplereinrichtung entsprechend eines einstellbaren Zielwertes der thermischen Leitfähigkeit zwischen der Trägerplatte und der Kopplereinrichtung einzustellen.

In einer weiteren, vorteilhaften Ausführungsform der vorliegenden Erfindung ist vorgesehen, dass die Speisenetzwerkanordnung dazu ausgebildet ist, mittels Mehrschalentechnik hergestellt zu werden. Dies ermöglicht einen modularisierten Aufbau, wobei das Gesamtsystem einfach und kostengünstig aus standardisierten Einzelbauteilen entlang definierter Stellen zusammengesetzt werden kann. Ferner kann dadurch eine effiziente Integration und ein einfachen Austausch von Komponenten vorgenommen werden, falls diese beschädigt werden.

In einer weiteren, vorteilhaften Ausführungsform der vorliegenden Erfindung ist vorgesehen, dass die Speisenetzwerkanordnung als eine Butler-Matrix ausgebildet ist. Beispielsweise kann die Speisenetzwerkanordnung als eine 1x1-Butler-Matrix, als eine 2x2-Butler-Matrix oder als eine 4x4-Butler-Matrix oder als eine 8x8-Butler-Matrix ausgebildet sein. Dies ermöglicht vorteilhaft eine hohe Integrationsdichte der Speisenetzwerkanordnung.

In einer weiteren, vorteilhaften Ausführungsform der vorliegenden Erfindung ist vorgesehen, dass mindestens eine Kopplereinrichtung der Mehrzahl der Kopplereinrichtungen als ein E-Koppler ausgebildet ist. Dies ermöglicht vorteilhaft einen sicheren breitbandigen Betrieb der Speisenetzwerkanordnung.

Der Begriff "E-Koppler", wie von der vorliegenden Erfindung verwendet, umfasst beispielsweise einen kapazitiven Koppler, welcher durch die Einkoppelung einer elektrischen Feldkomponente einer elektrischen Wirkleistung in einen Hohlraum, welcher an Ausgangsanschlüsse gekoppelt ist, einkoppelt.

In einer weiteren, vorteilhaften Ausführungsform der vorliegenden Erfindung ist vorgesehen, dass die mindestens eine Kopplereinrichtung der Mehrzahl der Kopplereinrichtungen als ein H-Koppler ausgebildet ist. Der Begriff "H-Koppler", wie von der vorliegenden Erfindung verwendet, bezeichnet beispielsweise einen Koppler, welcher eine induktive Koppelung bewirkt. Beispielsweise wird eine eintretende elektrische Wirkleistung durch eine Ausnehmung von einem Resonator auf einen zweiten Resonator übertragen. Dadurch können die Kopplereinrichtungen auf einfache Weise als abgleichbare Kopplereinrichtungen ausgebildet werden.

In einer weiteren, vorteilhaften Ausführungsform der vorliegenden Erfindung ist vorgesehen, dass mindestens eine Kopplereinrichtung der Mehrzahl der Kopplereinrichtungen als ein 3-dB-Koppler ausgebildet ist.

In einer weiteren, vorteilhaften Ausführungsform der vorliegenden Erfindung ist vorgesehen, dass die Mehrzahl der Kopplereinrichtungen zumindest teilweise miteinander über 30°- oder 45°- oder 90°- oder 180°-Hohlleiter-Bögen gekoppelt sind.

Die beschriebenen Ausgestaltungen und Weiterbildungen der vorliegenden Erfindung lassen sich beliebig miteinander kombinieren.

Weitere mögliche Ausgestaltungen, Weiterbildungen und Ausführungsformen der vorliegenden Erfindung umfassen auch nicht explizit genannte Kombinationen von zuvor oder im Folgenden bezüglich der Ausführungsbeispiele beschriebenen Merkmale der Erfindung.

### Kurze Beschreibung der Figuren

Die beiliegenden Zeichnungen sollen ein weiteres Verständnis der Ausführungsformen der vorliegenden Erfindung vermitteln. Die beiliegenden Zeichnungen veranschaulichen Ausführungsformen und dienen im Zusammenhang mit der Beschreibung der Erklärung von Konzepten der vorliegenden Erfindung.

Andere Ausführungsformen und viele der genannten Vorteile ergeben sich im Hinblick auf die vorliegenden Zeichnungen. Die dargestellten Elemente der vorliegenden Zeichnungen sind nicht notwendigerweise maßstabsgetreu zueinander gezeigt.

Es zeigen:
- Fig. 1: eine schematische Darstellung einer Speisenetzwerkanordnung zum Generieren eines Mehrfachsignals gemäß einer Ausführungsform der vorliegenden Erfindung;
- Fig. 2: eine schematische Darstellung einer Speisenetzwerkanordnung zum Generieren eines Mehrfachsignals gemäß einer weiteren Ausführungsform der vorliegenden Erfindung;
- Fig. 3: eine schematische Darstellung eines Diagramms eines Übertragungskoeffizienten einer 8x8-Butler-Matrix zur Erläuterung der vorliegenden Erfindung;
- Fig. 4: eine schematische Darstellung einer Speisenetzwerkanordnung zum Generieren eines Mehrfachantennensignals gemäß einer weiteren Ausführungsform der vorliegenden Erfindung;
- Fig. 5: eine schematische Darstellung einer Speisenetzwerkanordnung zum Generieren eines Mehrfachantennensignals gemäß einer weiteren Ausführungsform der vorliegenden Erfindung; und
- Fig. 6: eine schematische Darstellung eines Flussdiagramms eines Verfahrens zum Herstellen einer Speisenetzwerkanordnung gemäß einer Ausführungsform der vorliegenden Erfindung.

In den Figuren der Zeichnungen bezeichnen gleiche Bezugszeichen gleiche oder funktionsgleiche Elemente, Bauteile, Komponenten oder Verfahrensschritte der vorliegenden Erfindung, sofern nichts Gegenteiliges angegeben ist.

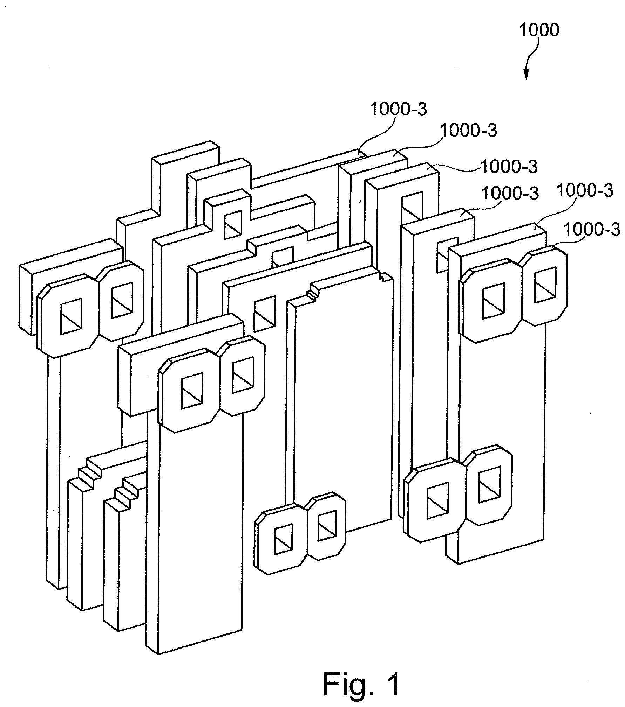

Fig. 1 zeigt eine Speisenetzwerkanordnung zum Generieren eines Mehrfachsignals gemäß einer weiteren Ausführungsform der vorliegenden Erfindung.

Eine Speisenetzwerkanordnung 1000 zum Generieren eines Mehrfachantennensignals umfasst beispielsweise eine Mehrzahl von Kopplereinrichtungen 100, eine Mehrzahl von Posauneneinrichtungen 102 und eine Mehrzahl von Trägerplatten 1000-3.

Die Mehrzahl von Kopplereinrichtungen 100 können in Hohlleitertechnik miteinander gekoppelt werden. Die Mehrzahl der Kopplereinrichtungen 100 können in einer Ausführungsform der vorliegenden Erfindung auf bis zu acht, vorzugsweise auf bis zu sechs, besonders bevorzugt auf bis zu fünf unterschiedlichen Trägerplatten 1000-3 angeordnet sein, wie in der Figur 1 dargestellt.

Die Trägerplatten 1000-3 können beispielsweise aus Aluminium oder aus einer Aluminium aufweisenden Legierung gefertigt sein.

Diese mechanische Integration der Kopplereinrichtungen 100 auf die Trägerplatten 1000-3 ermöglicht eine ausreichend gute thermische Koppelung der Kopplereinrichtungen 100 und den Wellenleitern, so dass eine hinreichend stabile Ausgangs- und Übertragungsleistung für unterschiedliche Belastungsszenarien hinsichtlich der Betriebstemperatur und hinsichtlich der geforderten Ausgansleistung bereitgestellt werden kann.

Beispielsweise ist mindestens eine Posauneneinrichtung 102 der Mehrzahl der Posauneneinrichtungen mit mindestens einer Kopplereinrichtung 100 gekoppelt. Die Posauneneinrichtung 102 kann beispielsweise dazu ausgebildet sein, eine elektrische Länge einer Zuleitung der mindestens einen Kopplereinrichtung 100 abzugleichen.

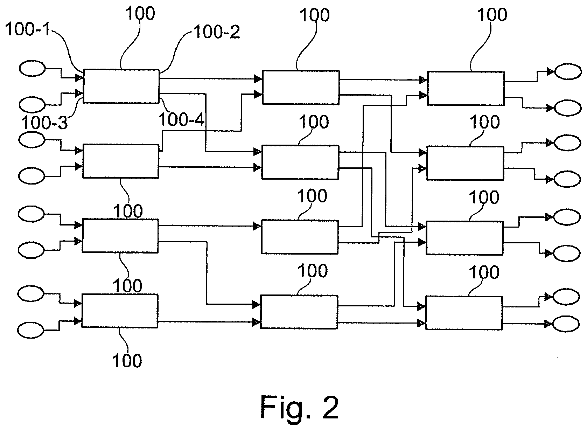

Die Fig. 2 zeigt eine Mehrzahl von Kopplereinrichtungen 100, welche ein Speise- oder Kopplernetzwerkanordnung 1000 ausbilden.

Auf der linken Seite der in der Fig. 2 dargestellten Speise- oder Kopplernetzwerkanordnung 1000 befinden sich die Eingänge auf der rechten Seite die Ausgänge.

Beispielsweise umfasst die Speisenetzwerkanordnung 1000 acht Eingänge und acht Ausgänge.

In einer Ausführungsform der vorliegenden Erfindung können die Kopplereinrichtungen 100 beispielsweise als E-Koppler oder als H-Koppler oder als 3-dB-Koppler ausgebildet werden und beispielsweise vier Anschlüsse 100-1, 100-2, 100-3 und 100-4 aufweisen.

Ferner kann die Kopplereinrichtung 100 auch als 3-dB-Branchline-Koppler oder als ein Richtkoppler zur Leistungsaufteilung in einem definierten Verhältnis und mit einem definierten Phasenverhältnis ausgebildet sein. Ein Richtkoppler ist ein Bauteil der Hochfrequenztechnik und dient dazu, aus einem Wellenleiter einen Teil der darin laufenden elektromagnetischen Wellen richtungsabhängig abzuzweigen.

Eine beispielsweise in den Anschluss 100-1 der Kopplereinrichtung 100 eintretende elektrische Wirkleistung teilt sich beispielsweise auf die Anschlüsse 100-2 und 100-3 der Kopplereinrichtung 100 auf.

Der vierte Anschluss 100-4 der Kopplereinrichtung 100 kann von den anderen Anschlüssen der Kopplereinrichtung 100 elektrisch entkoppelt sein.

Die elektrische Wirkleistung kann dabei induktiv - H-Koppler - oder kapazitiv - E-Koppler - eingekoppelt werden. Ferner kann an dem vierten Anschluss 100-4 der Kopplereinrichtung 100 ein Absorber mit geeigneter Leistung vorgesehen sein, welcher entsprechend den Fehlanpassungen an den Anschlüssen 100-2 und 100-3 der Kopplereinrichtung 100 ausgelegt ist.

Dabei kann die Kopplereinrichtung 100 dazu verwendet werden, eine Leistungsaufteilung in einem definierten Verhältnis und mit einem definierten Phasenverhältnis zwischen den Anschlüssen bereitzustellen.

Die Speisenetzwerkanordnung 1000 kann beispielsweise als eine 8x8-Butler-Matrix ausgebildet sein, um eine MPA-Realisierung, MPA steht für Multi-Port-Amplifier, auf Deutsch "Mehrfachverstärker", zu ermöglichen.

Das Speise- oder Kopplernetzwerk 1000 kann ferner eine Mehrzahl von Filtern oder harmonischen Filtern aufweisen.

Die Speisenetzwerkanordnung 1000 kann dabei beispielsweise dazu ausgelegt sein, eine Reduzierung der Standfläche und eine kompakte Integration bereitzustellen. Beispielsweise kann dies durch eine Realisierung in einem fünfschichtigen Aufbau erreicht werden.

Die Speisenetzwerkanordnung 1000 kann beispielsweise in einem Frequenzbereich von 10,0 bis15,0 GHz in einem WR 75 Typ ausgebildet werden.

In einer Ausführungsform der vorliegenden Erfindung ermöglicht die Speisenetzwerkanordnung 1000 beispielsweise vorteilhaft einen geringen Platzbedarf, eine hohe elektrische Phasenstabilität und einen geringen Einfluss von thermischen Schwankungen zu ermöglichen.

In einer Ausführungsform der vorliegenden Erfindung weist die Speisenetzwerkanordnung 1000 beispielsweise Abmessungen im Bereich von bis zu 200 mm auf 150 mm auf 200 mm auf bezüglich der Dimensionen Länge, Breite und Höhe, Beispielsweise weist die Speisenetzwerkanordnung 1000 eine Masse von bis zu 3500 g auf.

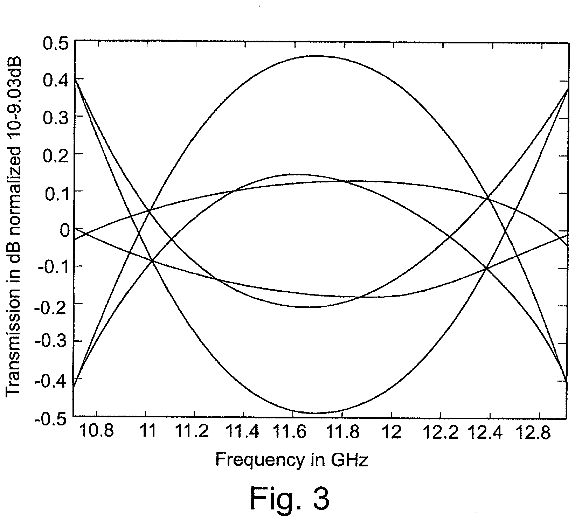

Die Fig. 3 zeigt eine schematische Darstellung eines Transmissionskoeffizienten einer 8x8-Butler-Matrix zur Erläuterung der Erfindung.

In der Fig. 3 ist ein Diagramm zur Erläuterung der Frequenzabhängigkeit eines Transmissionskoeffizienten dargestellt.

Die x-Achse des Diagramms zeigt einen Frequenzbereich von beispielsweise 10,8 bis 12,6 GHz, auf der y-Achse des Diagramms ist die Übertragung in dB aufgetragen, wobei die Übertragung auf -9,03 dB normiert wurde.

Die in der Fig. 3 gezeigten Kennlinien der Transmissionscharakteristik der Speisenetzwerkanordnung 1000 zeigen eine absolute Einfügedämpfung von weniger als 0,2 dB, eine Port-Isolation besser als 26 dB und eine Transmissionsphasenänderung von weniger als 1,5°. Die Belastbarkeit der Speisenetzwerkanordnung 1000 beträgt beispielsweise 8 x 220 W zuzüglich Marge, in Bezug auf die mechanischen Grenzen.

Die in der Fig. 3 gezeigten Kennlinien zeigen einen repräsentativen Satz von Messungen der Transmissionscharakteristik von unterschiedlichen und repräsentativen (Signal)-Pfaden.

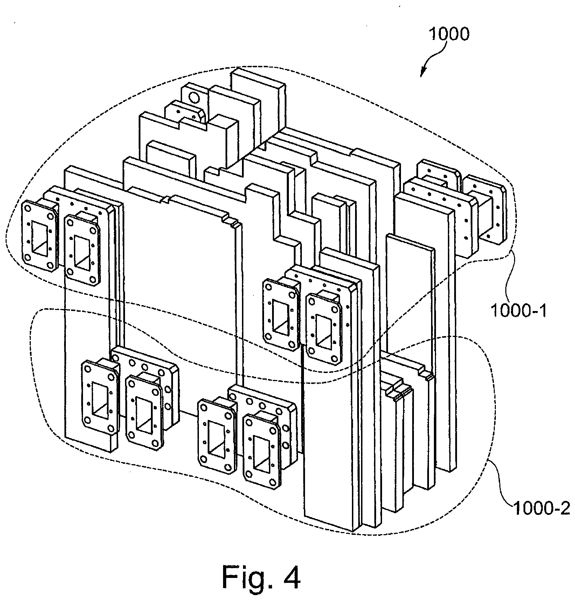

Die Fig. 4 zeigt eine Speisenetzwerkanordnung 1000 gemäß einer weiteren Ausführungsform der Erfindung.

Eine Speisenetzwerkanordnung 1000 zum Generieren eines Mehrfachantennensignals umfasst beispielsweise eine erste Seite 1000-1 und eine zweite Seite 1000-2.

Beispielsweise können Eingänge der Speisenetzwerkanordnung 1000 auf der ersten Seite 1000-1 und Ausgänge der Speisenetzwerkanordnung 1000 auf der zweiten Seite 1000-2 der Speisenetzwerkanordnung angeordnet sein.

Dies ermöglicht vorteilhaft eine räumliche Trennung von Ein- und Ausgängen der Speisenetzwerkanordnung 1000 bereitzustellen.

In einer Ausführungsform der vorliegenden Erfindung sind die Mehrzahl der Kopplereinrichtungen 100 auf den Trägerplatten 1000-3 derart angeordnet, dass die erste Seite 1000-1 der Speisenetzwerkanordnung 1000 gegenüber der zweiten Seite 1000-2 der Speisenetzwerkanordnung 1000 ist.

Mit anderen Worten, die erste Seite 1000-1 stellt eine Oberseite der Speisenetzwerkanordnung 1000 dar und die zweite Seite 1000-2 stellt eine Unterseite der Speisenetzwerkanordnung 1000 dar.

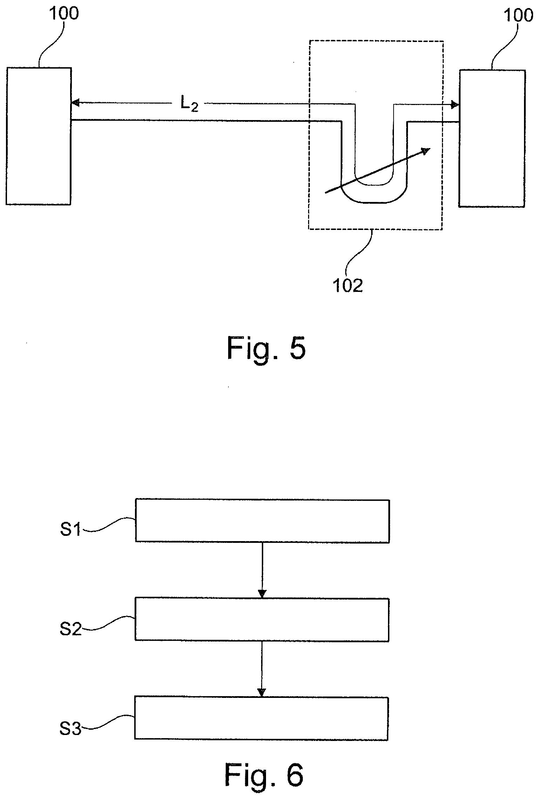

Die Fig. 5 zeigt eine schematische Darstellung einer Speisenetzwerkanordnung zum Generieren eines Mehrfachsignals gemäß einer weiteren Ausführungsform der vorliegenden Erfindung.

Die Speisenetzwerkanordnung 1000 umfasst beispielsweise eine Posauneneinrichtung 102, welche mit mindestens einer Kopplereinrichtung 100 oder beispielsweise, wie in Fig. 5 dargestellt, mit zwei Kopplereinrichtungen 100 gekoppelt ist.

Die Posauneneinrichtung 102 kann ferner dazu ausgebildet sein, eine elektrische Länge L2 einer Zuleitung einer Kopplereinrichtung 100, oder beispielsweise, wie in Fig. 5 dargestellt, zwischen zwei Kopplereinrichtungen 100 abzugleichen.

Die Posauneneinrichtung 102, auch bekannt unter dem Begriff "phase-stretcher" oder "line-stretcher", kann zwischen zwei Kopplereinrichtungen 100 geschaltet werden oder an eine Zu- oder Ableitung einer Kopplereinrichtung 100 angeordnet sein.

Die Figur 6 zeigt eine schematische Darstellung eines Flussdiagramms eines Verfahrens zum Herstellen einer Speisenetzwerkanordnung gemäß einer Ausführungsform der vorliegenden Erfindung.

Als ein erster Schritt des Verfahrens zum Herstellen einer Speisenetzwerkanordnung erfolgt beispielsweise ein Bereitstellen S1 einer Mehrzahl von Kopplereinrichtungen 100, welche in Hohlleitertechnik miteinander gekoppelt sind.

Als ein zweiter Schritt des Verfahrens erfolgt beispielsweise ein Bereitstellen S2 einer Mehrzahl von Posauneneinrichtungen 102, wobei mindestens eine der Posauneneinrichtungen 102 mit mindestens einer der Kopplereinrichtungen 100 gekoppelt ist und die Posauneneinrichtung 102 dazu ausgebildet ist, eine elektrische Länge einer Zuleitung der mindestens einen Kopplereinrichtung 100 abzugleichen.

Als ein dritter Schritt des Verfahrens erfolgt beispielsweise ein Anordnen S3 von Eingängen der Speisenetzwerkanordnung 1000 auf einer ersten Seite 1000-1 und ein Anordnen von Ausgängen der auf einer zweiten Seite 1000-2.

Als ein weiterer Schritt des Verfahrens zum Herstellen einer Speisenetzwerkanordnung erfolgt beispielsweise ein Abgleichen von elektrischen Weglängen zwischen den Kopplereinrichtungen 100.

Als ein weiterer Schritt des Verfahrens zum Herstellen einer Speisenetzwerkanordnung erfolgt beispielsweise ein Ändern einer thermischen Leitfähigkeit zwischen den Kopplereinrichtungen 100 und den Trägerplatten 1000-3.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar.

Ergänzend sei darauf hingewiesen, dass "umfassend" und "aufweisend" keine anderen Elemente oder Schritte ausschließt und "eine" oder "ein" eine Vielzahl nicht ausschließt.

Bezugszeichen in den Ansprüchen sind nicht als Einschränkung anzusehen.

## Patentansprüche

1. Speisenetzwerkanordnung (1000) zum Generieren eines Mehrfachantennensignals, wobei die Speisenetzwerkanordnung (1000) umfasst:
- eine Mehrzahl von Kopplereinrichtungen (100), welche in Hohlleitertechnik miteinander gekoppelt sind;
- eine Mehrzahl von Posauneneinrichtungen (102), wobei mindestens eine der Posauneneinrichtungen (102) mit mindestens einer der Kopplereinrichtungen (100) gekoppelt ist und die Posauneneinrichtung (102) dazu ausgebildet ist, eine elektrische Länge einer Zuleitung der mindestens einen Kopplereinrichtung (100) abzugleichen;
- eine Mehrzahl von übereinander geschichteten Trägerplatten (1000-3); und
- wobei die Kopplereinrichtungen (100) derart angeordnet sind, dass Eingänge der Speisenetzwerkanordnung auf einer ersten Seite (1000-1) der Speisenetzwerkanordnung (1000) über mehrere der Trägerplatten (1000-3) angeordnet sind und Ausgänge der Speisenetzwerkanordnung (1000) auf einer zweiten Seite (1000-2) der Speisenetzwerkanordnung (1000) über mehrere der Trägerplatten (1000-3) angeordnet sind;
wobei die Mehrzahl der Kopplereinrichtungen (100) auf von zwei bis acht unterschiedlichen von der Mehrzahl von Trägerplatten (1000-3) angeordnet sind; wobei die Kopplereinrichtungen (100) jeweils eine Adapterplatteneinrichtung aufweisen, welche dazu ausgelegt ist, eine thermische Leitfähigkeit zwischen den Kopplereinrichtungen (100) und den Trägerplatten (1000-3) einzustellen, wobei die Adapterplatteneinrichtungen ausgestaltet sind, eine individuelle Anpassung an die thermische Struktur der Trägerplatten zu ermöglichen; wobei eine Adapterplatteneinrichtung eine in der Größe änderbare oder einstellbare thermische Kontaktfläche zwischen der Trägerplatte und der Kopplereinrichtung ist und es ermöglicht, trotz unterschiedlicher vorherrschender Verhältnisse auf der Trägerplatte eine gleichmäßige Temperierung der Mehrzahl von auf der Trägerplatte angebrachten Kopplereinrichtungen zu gewährleisten.

2. Speisenetzwerkanordnung (1000) nach Anspruch 1, wobei die Speisenetzwerkanordnung dazu ausgebildet ist, mittels Mehrschalentechnik hergestellt zu werden.

3. Speisenetzwerkanordnung (1000) nach einem der vorhergehenden Ansprüche 1 bis 2, wobei die Speisenetzwerkanordnung (1000) als eine Butler Matrix ausgebildet ist.

4. Speisenetzwerkanordnung (1000) nach einem der vorhergehenden Ansprüche 1 bis 3, wobei mindestens eine Kopplereinrichtung (100) der Mehrzahl der Kopplereinrichtungen (100) als ein E-Koppler ausgebildet ist.

5. Speisenetzwerkanordnung (1000) nach einem der vorhergehenden Ansprüche 1 bis 4, wobei mindestens eine Kopplereinrichtung (100) der Mehrzahl der Kopplereinrichtungen (100) als ein H-Koppler ausgebildet ist.

6. Speisenetzwerkanordnung (1000) nach einem der vorhergehenden Ansprüche 1 bis 5, wobei mindestens eine Kopplereinrichtung (100) der Mehrzahl der Kopplereinrichtungen (100) als ein 3-dB-Koppler ausgebildet ist.

7. Speisenetzwerkanordnung (1000) nach einem der vorhergehenden Ansprüche 1 bis 6, wobei die Mehrzahl der Kopplereinrichtungen (100) zumindest teilweise miteinander über 30°- oder 45°- oder 90°- oder 180°-Hohlleiter-Bögen gekoppelt sind.

## Claims

1. Feed network arrangement (1000) for generating a multiple antenna signal, wherein the feed network arrangement (1000) comprises:
- a plurality of coupler devices (100) coupled to one another using hollow-conductor technology;
- a plurality of trombone devices (102), wherein at least one of the trombone devices (102) is coupled to at least one of the coupler devices (100) and the trombone device (102) is designed to adjust an electrical length of a feed line of the at least one coupler device (100);
- a plurality of support plates (1000-3) stacked above one another; and
- wherein the coupler devices (100) are arranged such that inputs of the feed network arrangement are arranged on a first side (1000-1) of the feed network arrangement (1000) over multiple instances of the support plates (1000-3) and outputs of the feed network arrangement (1000) are arranged on a second side (1000-2) of the feed network arrangement (1000) over multiple instances of the support plates (1000-3);
wherein the plurality of coupler devices (100) are arranged on from 2 to 8 different instances of the plurality of support plates (1000-3);
wherein the coupler devices (100) each have an adapter plate device designed to set a thermal conductivity between the coupler devices (100) and the support plates (1000-3), wherein the adapter plate devices are configured to allow individual matching to the thermal structure of the support plates; wherein an adapter plate device is a thermal contact area of changeable or adjustable size between the support plate and the coupler device and allows uniform temperature control for the plurality of coupler devices mounted on the support plate to be ensured despite different prevailing conditions on the support plate.

2. Feed network arrangement (1000) according to Claim 1, wherein the feed network arrangement is designed to be produced by means of multi-shell technology.

3. Feed network arrangement (1000) according to either of preceding Claims 1 and 2, wherein the feed network arrangement (1000) is in the form of a Butler matrix.

4. Feed network arrangement (1000) according to the preceding Claims 1 to 3, wherein at least one coupler device (100) of the plurality of coupler devices (100) is in the form of an E-coupler.

5. Feed network arrangement (1000) according to one of preceding Claims 1 to 4, wherein at least one coupler device (100) of the plurality of coupler devices (100) is in the form of an H-coupler.

6. Feed network arrangement (1000) according to one of preceding Claims 1 to 5, wherein at least one coupler device (100) of the plurality of coupler devices (100) is in the form of 3-dB coupler.

7. Feed network arrangement (1000) according to one of preceding Claims 1 to 6, wherein at least some of the plurality of coupler devices (100) are coupled to one another by means of 30° or 45° or 90° or 180° hollow-conductor loops.

## Revendications

1. Système de réseau d'alimentation (1000) destiné à générer un signal pour antennes multiples, dans lequel le système de réseau d'alimentation (1000) comprend :
- une pluralité de dispositifs de couplage (100) qui sont couplés les uns aux autres par la technologie des guides d'ondes ;
- une pluralité de dispositifs à trombone (102), dans lequel au moins l'un des dispositifs à trombone (102) est couplé à au moins l'un des dispositifs de couplage (100), et les dispositifs à trombone (102) sont conçus pour ajuster une longueur électrique d'une ligne d'amenée dudit au moins un dispositif de couplage (100) ;
- une pluralité de plaques de support (1000-3) empilées les unes sur les autres ; et
- dans lequel les dispositifs de couplage (100) sont disposés de manière à ce que des entrées du système de réseau d'alimentation soient disposées sur un premier côté (1000-1) du système de réseau d'alimentation (1000) sur plusieurs des plaques de support (1000-3) et à ce que des sorties du système de réseau d'alimentation (1000) soient disposées sur un deuxième côté (1000-2) du système de réseau d'alimentation (1000) sur plusieurs des plaques de support (1000-3) ;
dans lequel la pluralité des dispositifs de couplage (100) sont disposés sur deux à huit plaques de support différentes de la pluralité de plaques de support (1000-3) ;
dans lequel les dispositifs de couplage (100) comportent respectivement un dispositif à plaques d'adaptation qui est conçu pour régler une conductivité thermique entre les dispositifs de couplage (100) et les plaques de support (1000-3), dans lequel les dispositifs à plaques d'adaptation sont conçus pour permettre une adaptation individuelle à la structure thermique des plaques de support ; dans lequel un dispositif à plaques d'adaptation est une surface de contact thermique de taille modifiable ou réglable entre la plaque de support et le dispositif de couplage et permet d'assurer une régulation homogène de la température de la pluralité de dispositifs de couplage montés sur la plaque de support malgré les différentes conditions régnant sur cette plaque de support.

2. Système de réseau d'alimentation (1000) selon la revendication 1, dans lequel le système de réseau d'alimentation est conçu pour être produit au moyen d'une technique à enveloppes multiples.

3. Système de réseau d'alimentation (1000) selon l'une des revendications 1 à 2 précédentes, dans lequel le système de réseau d'alimentation (1000) est réalisé sous la forme d'une matrice de Butler.

4. Système de réseau d'alimentation (1000) selon l'une des revendications 1 à 3 précédentes, dans lequel au moins un dispositif de couplage (100) de la pluralité de dispositifs de couplage (100) est réalisé sous la forme d'un coupleur en E.

5. Système de réseau d'alimentation (1000) selon l'une des revendications 1 à 4 précédentes, dans lequel au moins un dispositif de couplage (100) de la pluralité de dispositifs de couplage (100) est réalisé sous la forme d'un coupleur en H.

6. Système de réseau d'alimentation (1000) selon l'une des revendications 1 à 5 précédentes, dans lequel au moins un dispositif de couplage (100) de la pluralité de dispositifs de couplage (100) est réalisé sous la forme d'un coupleur à 3 dB.

7. Système de réseau d'alimentation (1000) selon l'une des revendications 1 à 6 précédentes, dans lequel la pluralité de dispositifs de couplage (100) sont couplés au moins partiellement les uns aux autres par l'intermédiaire de guides d'ondes en arcs de 30° ou de 45° ou de 90° ou de 180°.
